# EUROPÄISCHE PATENTSCHRIFT

(11) **EP 3 908 154 B1**
(45) Veröffentlichungstag und Bekanntmachung des Hinweises auf die Patenterteilung: **13.03.2024**
(21) Anmeldenummer: 20700572.9
(22) Anmeldetag: 10.01.2020
(51) Int. Cl.: A47C 1/024, A47C 1/032, A47C 7/72, A47C 31/00

(54) **SITZMÖBELCHASSIS**
SEATING FURNITURE CHASSIS
CHÂSSIS DE SIÈGE

(30) Priorität: 10.01.2019 DE 202019100105 U
(43) Veröffentlichungstag der Anmeldung: 17.11.2021
(73) Patentinhaber: Innotec Motion GmbH, 59558 Lippstadt (DE)
(72) Erfinder: MACKERT, Michael, 59602 Rüthen (DE)
(74) Vertreter: Schäperklaus, Jochen
(86) Internationale Anmeldenummer: PCT/EP2020/050509
(87) Internationale Veröffentlichungsnummer: WO 2020/144309

(56) Entgegenhaltungen:
- DE-A1-102017 111 532
- KR-A- 20120 057 040
- US-A- 5 807 177
- US-A- 6 011 318
- US-A1- 2003 098 661
- US-B1- 7 633 401

## Beschreibung

Die vorliegende Erfindung betrifft ein Sitzmöbelchassis gemäß dem Oberbegriff des Anspruchs 1.

Bekannte Sitzmöbelchassis weisen einen Grundkörper und daran befestigte Kabel auf. Die Kabel verbinden periphere elektrische Geräte wie Antriebsmittel und Bediengeräte mit einer zentralen Steuereinheit. Die Kabel werden bei der Herstellung am Sitzmöbelchassis befestigt und mit den elektrischen Geräten und der Steuereinheit verbunden.

Die US 2003/098661 A1 offenbart eine Steuersystemarchitektur, die einen oder mehrere Fahrzeugsitze steuert und die Aktuatoren, Sensoren und Steuerungen über einen gemeinsamen seriellen Bus durch programmierbare Anschlüsse miteinander verbindet. Jeder der programmierbaren Anschlüsse, die mit einem bestimmten Gerät verbunden sind, stellt eine eindeutige Adresse für dieses Gerät bereit, die es ermöglicht, das Gerät spezifisch zu adressieren und spezifische Funktionen auf der Grundlage der elektrischen Signale auszuführen, die speziell für das elektronische Gerät bestimmt sind, wobei die Vielzahl der elektrischen Signale gleichzeitig und ohne Interferenzen über den gemeinsamen seriellen Bus übertragen und empfangen werden.

Die US 7 633 401 B1 offenbart ein Diagnosesystem zur Verwendung in der elektronischen Steuerschaltung für motorbetätigte Hebe- und/oder Neigemechanismen für Stühle. Eine Handsteuerung wird verwendet, um die Hebe- und/oder Neigemechanismen zu betätigen.

Die KR 2012 0057 040 A offenbart eine Kabelbefestigungsvorrichtung für einen Vibrationssessel, um dessen Aussehen zu verbessern und um gleichzeitig Kabelverdrahtungs- und Befestigungsarbeiten durchzuführen.

Die US 6 011 618 A offenbart einen Kabelbaum zur elektrischen Verbindung eines. Die Ummantelung hat vorzugsweise eine Serpentinen- oder andere Form mit reduzierter Länge in ihrem unverformten Zustand. Auf diese Weise wird, wenn der Fahrzeugsitz zwischen einer ersten Position und einer zweiten Position bewegt wird, überschüssiges Spiel im Kabelbaum durch die Formgedächtnis-Eigenschaft des Kabelbaums aufgenommen, wodurch eine Beschädigung der Drähte verhindert wird.

Die US 5 807 177 A offenbart einen Spielautomatenstuhl mit einem Sitz, einer Rückenlehne und einem Stützelement, um diese zu stützen.

Die DE 10 2017 111 532 A1 offenbart ein Funktionspolstermöbel mit mindestens einem Sitz, mit mindestens einer Sitzfunktion und mit mindestens einem Touchpad zur Bedienung der Sitzfunktion. Es sind Befestigungsmittel vorgesehen, die so ausgestaltet sind, dass sie das Touchpad unverlierbar an dem Möbel befestigen.

Demgegenüber liegt der vorliegenden Erfindung die Aufgabe zugrunde, ein flexibleres Sitzmöbelchassis zu schaffen. Außerdem soll ein Verfahren zur Montage eines solchen Sitzmöbels geschaffen werden.

Diese Aufgabe wird durch ein Sitzmöbelchassis gemäß Anspruch 1 und durch ein Verfahren gemäß Anspruch 12 gelöst. Ausführungsformen der Erfindung sind in den abhängigen Ansprüchen angegeben.

Das Sitzmöbelchassis umfasst einen Grundkörper und mehrere elektrische Kabel, die am Grundkörper befestigt sind. Unter einem Grundkörper wird dabei im Rahmen dieser Beschreibung insbesondere ein Konstrukt verstanden, das einen Sitzflächenrahmen und einen oder mehrere Standfüße umfasst, mit denen das Sitzmöbelchassis auf einer Bodenfläche aufstellbar ist. Der Sitzflächenrahmen kann eine Sitzfläche umrahmen. Ein Benutzer kann nach Polsterung der Sitzfläche auf der Polsterung sitzen.

Jedes der Kabel weist an einem ersten Ende ein Einzelverbindungsmittel auf, das mit einem peripheren elektrischen Gerät elektrisch verbindbar ist. Da jedes der Einzelverbindungsmittel mit einem der peripheren elektrischen Geräte verbindbar ist, können die Kabel insbesondere mit mehreren peripheren Geräten verbindbar sein. Unter einem Einzelverbindungsmittel wird im Rahmen dieser Beschreibung insbesondere ein Stecker oder eine Buchse verstanden.

Außerdem umfasst das Sitzmöbelchassis ein Zentralverbindungsmittel. Jedes der Kabel ist an einem zweiten Ende elektrisch mit dem Zentralverbindungsmittel verbunden. Das zweite Ende ist dabei dem ersten Ende gegenüber angeordnet. Es ist insbesondere möglich, dass das Sitzmöbelchassis genau ein einziges Zentralverbindungsmittel umfasst. Das Zentralverbindungsmittel ist ein Stecker oder eine Buchse.

Aufgrund der Verbindung der Kabel mit dem Zentralverbindungsmittel kann beispielsweise eine Steuereinheit besonders einfach mit den Kabeln verbunden werden, indem das Zentralverbindungsmittel in die Steuereinheit gesteckt wird. Ein Austausch oder eine Nachrüstung der Steuereinheit ist somit besonders einfach.

Es ist beispielsweise möglich, dass die Kabel immer am Sitzmöbelchassis angeordnet sind, unabhängig davon ob eine Ausrüstung des Sitzmöbelchassis mit elektrischen Geräten vorgesehen ist oder nicht. Wenn ein Benutzer beispielsweise ein Sitzmöbel mit einem Sitzmöbelchassis erwirbt, das er ohne elektrische Geräte gekauft hat, kann er die elektrischen Geräte und die Steuereinheit einfach nachträglich nach seinen Anforderungen erwerben und nachrüsten, indem er die Kabel mit den nachgekauften Geräten und der Steuereinheit verbindet. Aufgrund der Verwendung des Zentralverbindungsmittels ist der Aufwand für den Benutzer besonders gering. Außerdem ist die Verkabelung bereits am Sitzmöbelchassis befestigt, sodass das Risiko einer falschen Verkabelung verringert wird. Die Kabel können beispielsweise so angeordnet sein, dass sie jeweils in einen Aufnahmeraum für das mit dem jeweiligen Kabel zu verbindende periphere elektrische Gerät ragen. In diesem Fall ist für den Benutzer direkt klar, welches Kabel er mit dem dort eingebauten Gerät verbinden muss.

Es ist auch möglich, dass jeweils eines der Kabel und/oder eines der Einzelverbindungsmittel und eines der peripheren elektrischen Geräte die gleiche Farbe aufweisen, sodass für einen Benutzer leicht erkennbar ist, welches Kabel bzw. Einzelverbindungsmittel mit welchem peripheren elektrischen Gerät zu verbinden ist.

Durch die Verkabelung und die Verwendung des Zentralverbindungsmittel kann das Sitzmöbelchassis außerdem besonders einfach mit peripheren elektrischen Geräten erweitert werden. Auch die Austauschbarkeit peripherer elektrischer Geräte wird vereinfacht.

Das Sitzmöbelchassis umfasst ein Rückenteil. Das Rückenteil ist am Grundkörper befestigbar. Das zentrale elektrische Gerät ist am Rückenteil angeordnet. Unter einem Rückenteil wird dabei im Rahmen dieser Beschreibung insbesondere ein Bauteil verstanden, das an einer Rückseite des Grundkörpers befestigt ist. Dabei ist die Rückseite bei bestimmungsgemäßer Benutzung des Sitzmöbelchassis die Seite des Grundkörpers, die hinter einem auf dem Sitzflächenrahmen sitzenden Benutzer angeordnet ist.

Das Zentralverbindungsmittel ist mit einem zentralen elektrischen Gerät verbindbar. Das zentrale elektrische Gerät kann beispielsweise als Steuereinheit ausgebildet sein.

Nach einer Ausführungsform der Erfindung kann das Sitzmöbelchassis die peripheren elektrischen Geräte umfassen.

Nach einer Ausführungsform der Erfindung können die peripheren elektrischen Geräte ein Bediengerät und/oder ein Antriebsmittel umfassen. Unter einem Bediengerät wird dabei insbesondere ein Gerät verstanden, das von einem Benutzer zur Steuerung der Antriebsmittel genutzt werden kann. Unter einem Antriebsmittel wird insbesondere ein elektrischer Motor verstanden.

Nach einer Ausführungsform der Erfindung kann das zentrale elektrische Gerät dazu ausgebildet sein, erste Steuersignale vom Bediengerät zu empfangen und zu verarbeiten.

Nach einer Ausführungsform der Erfindung kann das zentrale elektrische Gerät dazu ausgebildet sein, in Abhängigkeit von den ersten Steuersignalen zweite Steuersignale zu erzeugen und an das Antriebsmittel auszugeben. Beispielsweise kann das erste Steuersignal einen Hinweis darauf umfassen, dass ein Benutzer die Neigung einer Rückenlehne ändern oder eine Fußstütze aus- oder einfahren möchte. In diesem Fall kann das zweite Steuersignal einen Hinweis auf eine Rotationsrichtung des entsprechenden Antriebsmittels umfassen.

Nach einer Ausführungsform der Erfindung kann das zentrale elektrische Gerät dazu ausgebildet sein, automatisch die peripheren elektrischen Geräte zu erkennen. Hierunter wird im Rahmen dieser Beschreibung insbesondere verstanden, dass die Erkennung ohne Interaktion eines Benutzers erfolgt. Außerdem kann das zentrale elektrische Gerät dazu ausgebildet sein, eine Art und einen Funktionsumfang der peripheren elektrischen Geräte zu erkennen. Auf diese Weise ist es für einen Benutzer besonders einfach, periphere elektrische Geräte auszutauschen oder neu anzuschließen. Somit können beispielsweise die Funktionen des Sitzmöbelchassis erweitert oder geändert werden.

Das zentrale elektrische Gerät kann Kommunikationsmittel für eine drahtlose Kommunikation umfassen. Die drahtlose Kommunikation kann dabei beispielsweise Bluetooth und/oder WLAN sein. Über diese Kommunikationsmittel kann beispielsweise eine Ferndiagnose und/oder eine Fernwartung des zentralen elektrischen Geräts und/oder der peripheren elektrischen Geräte erfolgen. So kann das zentrale elektrische Gerät dazu ausgebildet sein, eine Fehlermeldung über die Kommunikationsmittel auszugeben.

Es ist auch möglich, dass die Kommunikationsmittel dazu ausgebildet sein, mit einem Smartphone drahtlos verbunden zu werden. So können Funktionen des zentralen elektrischen Geräts und/oder der peripheren elektrischen Geräte über das Smartphone gesteuert werden.

Nach einer Ausführungsform der Erfindung können die Kabel als Kabelbaum ausgebildet sein. Hierunter wird insbesondere verstanden, dass die Kabel gebündelt angeordnet sind. Der Kabelbaum kann beispielsweise vorkonfektioniert für das Sitzmöbelchassis hergestellt worden sein, sodass die Montage besonders einfach ist.

Nach einer Ausführungsform der Erfindung können die peripheren elektrischen Geräte jeweils einen Datenspeicher und ein Signalverarbeitungsmittel umfassen. Der Datenspeicher kann insbesondere als digitaler Datenspeicher ausgebildet sein. Das Signalverarbeitungsmittel kann beispielsweise als Prozessor bezeichnet werden. Das Signalverarbeitungsmittel kann dazu ausgebildet sein, den Datenspeicher auszulesen.

Die peripheren elektrischen Geräte können auf diese Weise mit dem zentralen elektrischen Gerät kommunizieren. Dies ist besonders vorteilhaft, damit das zentrale elektrische Gerät die peripheren elektrischen Geräte automatisch erkennen kann. Ein Benutzer kann dann einfach eines der peripheren elektrischen Geräte neu anschließen, wobei das zentrale elektrische Gerät ohne weitere Interaktion des Benutzers dieses periphere elektrische Gerät steuern kann.

Die peripheren elektrischen Geräte können außerdem einen Stecker und/oder eine Buchse umfassen, mit denen sie jeweils mit einem der Einzelverbindungsmittel verbindbar sind.

Es ist auch möglich, dass das Sitzmöbelchassis eine Multimediaeinheit umfasst, die über das zentrale elektrische Gerät steuerbar ist. Ein Benutzer kann dann beispielsweise über ein Bedienmittel des zentralen elektrischen Geräts und/oder über ein Smartphone die Multimediaeinheit steuern. Die Multimediaeinheit kann beispielsweise dazu ausgebildet sein, Bilder, Videos und/oder Töne abzuspielen.

Außerdem können die peripheren elektrischen Geräte ein Sensormittel umfassen. Das Sensormittel kann beispielsweise dazu ausgebildet sein, zu detektieren ob eine Person auf dem Sitzmöbelchassis sitzt. Dies kann beispielsweise über die von der Person ausgeübte Gewichtskraft erfolgen.

Zusätzlich können die peripheren elektrischen Geräte weitere Sensormittel umfassen, die dazu ausgebildet sein, Vitalzeichen einer auf dem Sitzmöbelchassis sitzenden Person zu überwachen. Wenn dann beispielsweise keine Vitalzeichen detektiert werden, obwohl gleichzeitig detektiert wird, dass eine Person auf dem Sitzmöbelchassis sitzt, kann ein Alarm ausgelöst werden.

Die peripheren elektrischen Geräte können beispielswiese ein Fußstützenantriebsmittel und ein Rückenlehnenantriebsmittel umfassen. In diesem Fall kann das zentrale elektrische Gerät einen Handschalter und/oder ein Bedienfeld umfassen. Das Fußstützenantriebsmittel kann dazu ausgebildet sein, eine Fußstütze des Sitzmöbelchassis zu bewegen. Das Rückenlehnenantriebsmittel kann dazu ausgebildet sein, eine Rückenlehne des Sitzmöbelchassis zu bewegen. Der Handschalter und/oder das Bedienfeld kann bzw. können dazu ausgebildet sein, das Fußstützenantriebsmittel und/oder das Rückenlehnenantriebsmittel zu steuern. Das Bedienfeld kann beispielsweise als Touchscreen ausgebildet sein.

Zusätzlich können die peripheren elektrischen Geräte auch noch ein Kopfstützenantriebsmittel umfassen, das dazu ausgebildet sein kann, eine Kopfstütze des Sitzmöbelchassis zu bewegen. Das Kopfstützenantriebsmittel kann ebenfalls mit dem Handschalter und/oder dem Bedienfeld steuerbar sein.

Zusätzlich oder alternativ können die peripheren elektrischen Geräte eine Aufstehhilfe umfassen. Die Aufstehhilfe kann dazu ausgebildet sein, eine Sitzfläche des Sitzmöbelchassis zu neigen. Die Aufstehhilfe kann ebenfalls mit dem Handschalter und/oder dem Bedienfeld steuerbar sein.

Nach einer Ausführungsform der Erfindung kann das Rückenteil eine Rückenlehne umfassen.

Nach einer Ausführungsform der Erfindung können die Antriebsmittel am Grundkörper angeordnet sein.

Nach einer Ausführungsform der Erfindung kann das Sitzmöbelchassis ein Seitenteil umfassen. Das Seitenteil kann am Grundkörper befestigbar sein. Das Bediengerät kann am Seitenteil angeordnet sein. Die Anordnung des Bediengeräts am Seitenteil ist von einem auf dem Sitzmöbelchassis sitzenden Benutzer besonders einfach zu erreichen. Unter einem Seitenteil wird dabei im Rahmen dieser Beschreibung insbesondere ein Bauteil verstanden, das bei bestimmungsgemäßer Benutzung des Sitzmöbelchassis seitlich neben einem auf dem Sitzflächenrahmen sitzendem Benutzer angeordnet ist. Beispielsweise kann das Seitenteil eine Armlehne umfassen.

Beim Verfahren gemäß Anspruch 12 werden die Kabel am Grundkörper befestigt und elektrisch über die Einzelverbindungsmittel mit den peripheren elektrischen Geräten verbunden. Außerdem werden die Kabel mit dem zentralen elektrischen Gerät über das Zentralverbindungsmittel verbunden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Dabei werden für gleiche und ähnliche Bauteile und für Bauteile mit gleichen oder ähnlichen Funktionen dieselben Bezugszeichen verwendet. Darin zeigen:

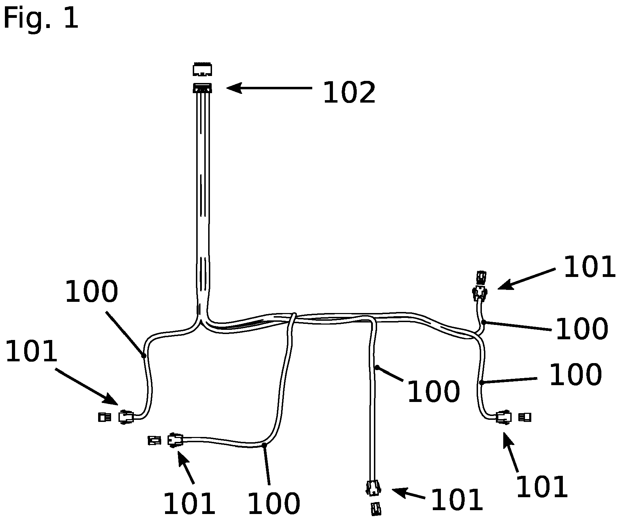

- Fig. 1: eine schematische perspektivische Ansicht mehrerer Kabel zur Verwendung in einem Sitzmöbelchassis nach einer Ausführungsform der Erfindung; und
- Fig. 2: eine schematische perspektivische Ansicht eines Sitzmöbelchassis nach einer Ausführungsform der Erfindung.

Die Kabel 100 sind jeweils an einem ersten Ende mit einem Einzelstecker 101 verbunden, der in eine Buchse eingesteckt werden kann. Es wäre auch möglich, die Kabel mit einer Buchse zu verbinden, in die ein Stecker gesteckt werden kann. Die Kabel 100 sind außerdem an ihrem zweiten Ende mit einem Zentralstecker 102 verbunden, der in eine Buchse gesteckt werden kann. Es wäre auch möglich, die Kabel mit einer Zentralbuchse zu verbinden, in die ein Stecker gesteckt werden kann.

Aufgrund der Verwendung des Zentralsteckers 102 kann ein zentrales elektrisches Gerät besonders einfach elektrisch mit den Kabeln verbunden werden, sodass das zentrale elektrische Gerät beispielsweise von einem Benutzer nachträglich verbunden werden kann. Außerdem ist das Risiko von falschen Kontaktierungen durch die Verwendung des Zentralsteckers 102 verringert.

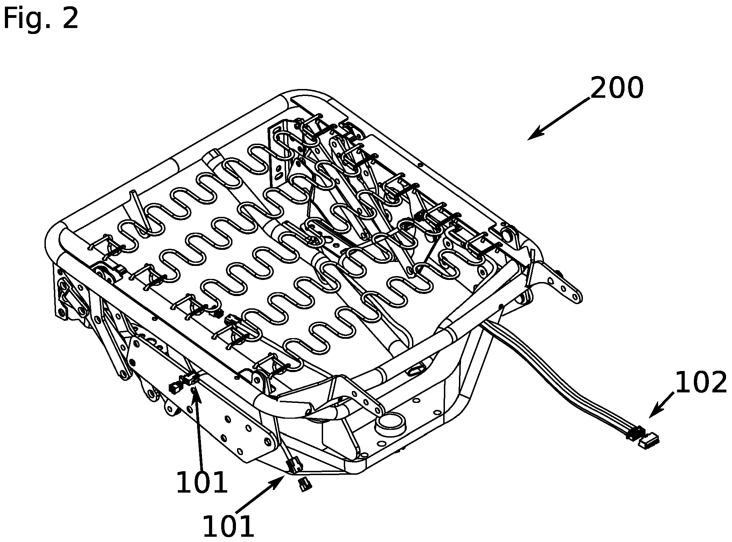

Aus Figur 2 ist ersichtlich, dass die Kabel 100 am Grundkörper 200 des Sitzmöbelchassis befestigt sind. Dabei sind die Stecker 101 so angeordnet, dass sie besonders einfach mit elektrischen peripheren Geräten wie beispielsweise einem Motor oder einem Bediengerät verbunden werden können. Aufgrund dieser Anordnung ist es für einen Benutzer besonders einfach das periphere elektrische Gerät korrekt mit dem zentralen elektrischen Gerät elektrisch zu verbinden.

## Patentansprüche

1. Sitzmöbelchassis, umfassend einen Grundkörper (200) und mehrere elektrisch leitfähige Kabel (100), wobei die Kabel (100) am Grundkörper (200) befestigt sind, wobei jedes der Kabel (100) jeweils an einem ersten Ende ein Einzelverbindungsmittel (101) aufweist, das mit einem peripheren elektrischen Gerät elektrisch verbindbar ist, wobei das Sitzmöbelchassis ein Zentralverbindungsmittel (102) umfasst, wobei das Zentralverbindungsmittel (102) mit einem zentralen elektrischen Gerät verbindbar ist, wobei jedes der Kabel (100) an einem zweiten Ende elektrisch mit dem Zentralverbindungsmittel (102) verbunden ist, wobei das Sitzmöbelchassis ein Rückenteil umfasst, wobei das Rückenteil am Grundkörper (200) befestigbar ist, wobei das Sitzmöbelchassis das zentrale elektrische Gerät umfasst und das zentrale elektrische Gerät am Rückenteil angeordnet ist, **dadurch gekennzeichnet, dass** das Zentralverbindungsmittel ein Stecker oder eine Buchse ist.

2. Sitzmöbelchassis nach dem vorherigen Anspruch, **dadurch gekennzeichnet, dass** das Sitzmöbelchassis die peripheren elektrischen Geräte umfasst.

3. Sitzmöbelchassis nach einem der vorherigen Ansprüche, **dadurch gekennzeichnet, dass** die peripheren elektrischen Geräte ein Bediengerät und/oder ein Antriebsmittel umfassen.

4. Sitzmöbelchassis nach dem vorherigen Anspruch, **dadurch gekennzeichnet, dass** das zentrale elektrische Gerät dazu ausgebildet ist, erste Steuersignale vom Bediengerät zu empfangen und zu verarbeiten.

5. Sitzmöbelchassis nach dem vorherigen Anspruch, **dadurch gekennzeichnet, dass** das zentrale elektrische Gerät dazu ausgebildet ist, in Abhängigkeit von den ersten Steuersignalen zweite Steuersignale zu erzeugen und an das Antriebsmittel auszugeben.

6. Sitzmöbelchassis nach einem der vorherigen vier Ansprüche, **dadurch gekennzeichnet, dass** das zentrale elektrische Gerät dazu ausgebildet ist, automatisch die peripheren elektrischen Geräte zu erkennen.

7. Sitzmöbelchassis nach einem der vorherigen Ansprüche, **dadurch gekennzeichnet, dass** die Kabel als Kabelbaum ausgebildet sind.

8. Sitzmöbelchassis nach einem der vorherigen Ansprüche, **dadurch gekennzeichnet, dass** die peripheren Geräte jeweils einen Datenspeicher und ein Signalverarbeitungsmittel umfassen.

9. Sitzmöbelchassis nach einem der vorherigen Ansprüche, **dadurch gekennzeichnet, dass** das Rückenteil eine Rückenlehne umfasst.

10. Sitzmöbelchassis nach einem der Ansprüche 3 bis 7, **dadurch gekennzeichnet, dass** die Antriebsmittel am Grundkörper (200) angeordnet sind.

11. Sitzmöbelchassis nach einem der Ansprüche 3 bis 8, **dadurch gekennzeichnet, dass** das Sitzmöbelchassis ein Seitenteil umfasst, wobei das Seitenteil am Grundkörper (200) befestigbar ist, wobei das Bediengerät am Seitenteil angeordnet ist.

12. Verfahren zur Montage eines Sitzmöbelchassis nach einem der vorherigen Ansprüche, umfassend die folgenden Schritte:
- Befestigung der Kabel (100) am Grundkörper (200);
- Elektrische Verbindung der Kabel (100) mit den peripheren elektrischen Geräten über die Einzelverbindungsmittel (101); und
- Elektrische Verbindung der Kabel (100) mit dem zentralen elektrischen Gerät über das Zentralverbindungsmittel (102).

## Claims

1. Seating furniture chassis comprising a base body (200) and a plurality of electrically conductive cables (100), wherein the cables (100) are fastened to the base body (200), wherein each of the cables (100) has at a first end an individual connector (101) which is electrically connectable to a peripheral electrical device, wherein the seating furniture chassis comprises a central connector (102), wherein the central connector (102) is connectable to a central electrical device, wherein each of the cables (100) is electrically connected at a second end to the central connector (102), wherein the seating furniture chassis comprises a back part, wherein the back part is fastenable to the base body (200), wherein the seating furniture chassis comprises the central electrical device and the central electrical device is arranged on the back part, **characterised in that** the central connector is a plug or a socket.

2. Seating furniture chassis according to the preceding claim, **characterised in that** the seating furniture chassis comprises the peripheral electrical devices.

3. Seating furniture chassis according to any one of the preceding claims, **characterised in that** the peripheral electrical devices comprise an operating device and/or a drive mechanism.

4. Seating furniture chassis according to the preceding claim, **characterised in that** the central electrical device is configured to receive and process first control signals from the operating device.

5. Seating furniture chassis according to the preceding claim, **characterised in that** the central electrical device is configured to generate second control signals and to output them to the drive mechanism as a function of the first control signals.

6. Seating furniture chassis according to any one of the preceding four claims, **characterised in that** the central electrical device is configured to automatically detect the peripheral electrical devices.

7. Seating furniture chassis according to any one of the preceding claims, **characterised in that** the cables are configured as a cable harness.

8. Seating furniture chassis according to any one of the preceding claims, **characterised in that** the peripheral devices each comprise a data memory and a signal processor.

9. Seating furniture chassis according to any one of the preceding claims, **characterised in that** the back part comprises a backrest.

10. Seating furniture chassis according to any one of claims 3 to 7, **characterised in that** the drive mechanism is arranged on the base body (200).

11. Seating furniture chassis according to any one of claims 3 to 8, **characterised in that** the seating furniture chassis comprises a side part, wherein the side part is fastenable to the base body (200), wherein the operating device is arranged on the side part.

12. Method for assembly of a seating furniture chassis according to any one of the preceding claims, comprising the following steps:
- fastening the cables (100) to the base body (200);
- electrically connecting the cables (100) to the peripheral electrical devices via the individual connectors (101); and
- electrically connecting the cables (100) to the central electrical device via the central connector (102).

## Revendications

1. Châssis de siège comprenant un corps de base (200) et plusieurs câbles électroconducteurs (100), dans lequel les câbles (100) sont fixés au corps de base (200), dans lequel chacun des câbles (100) présente respectivement à une première extrémité un moyen de liaison individuelle (101) qui peut être relié électriquement à un appareil électrique périphérique, dans lequel le châssis de siège comprend un moyen de liaison centrale (102), dans lequel le moyen de liaison centrale (102) peut être relié à un appareil électrique central, dans lequel chacun des câbles (100) est relié électriquement à une seconde extrémité au moyen de liaison centrale (102), dans lequel le châssis de siège comprend une partie arrière, dans lequel la partie arrière peut être fixée au corps de base (200), dans lequel le châssis de siège comprend l'appareil électrique central et l'appareil électrique central est agencé au niveau de la partie arrière, **caractérisé en ce que** le moyen de liaison centrale est une fiche ou une douille.

2. Châssis de siège selon la revendication précédente, **caractérisé en ce que** le châssis de siège comprend les appareils électriques périphériques.

3. Châssis de siège selon l'une quelconque des revendications précédentes, **caractérisé en ce que** les appareils électriques périphériques comprennent un appareil de commande et/ou un moyen d'entraînement.

4. Châssis de siège selon la revendication précédente, **caractérisé en ce que** l'appareil électrique central est réalisé afin de recevoir et de traiter des premiers signaux de commande de l'appareil de commande.

5. Châssis de siège selon la revendication précédente, **caractérisé en ce que** l'appareil électrique central est réalisé afin de générer en fonction des premiers signaux de commande des seconds signaux de commande et de les délivrer au moyen d'entraînement.

6. Châssis de siège selon l'une quelconque des revendications précédentes, **caractérisé en ce que** l'appareil électrique central est réalisé afin de reconnaître automatiquement les appareils électriques périphériques.

7. Châssis de siège selon l'une quelconque des revendications précédentes, **caractérisé en ce que** les câbles sont réalisés comme faisceau de câbles.

8. Châssis de siège selon l'une quelconque des revendications précédentes, **caractérisé en ce que** les appareils périphériques comprennent respectivement une mémoire de données et un moyen de traitement de signal.

9. Châssis de siège selon l'une quelconque des revendications précédentes, **caractérisé en ce que** la partie arrière comprend un dossier.

10. Châssis de siège selon l'une quelconque des revendications 3 à 7, **caractérisé en ce que** les moyens d'entraînement sont agencés au niveau du corps de base (200).

11. Châssis de siège selon l'une quelconque des revendications 3 à 8, **caractérisé en ce que** le châssis de siège comprend une partie latérale, dans lequel la partie latérale peut être fixée au corps de base (200), dans lequel l'appareil de commande est agencé au niveau de la partie latérale.

12. Procédé de montage d'un châssis de siège selon l'une quelconque des revendications précédentes, comprenant les étapes suivantes :
- la fixation des câbles (100) au corps de base (200) ;
- la liaison électrique des câbles (100) avec les appareils électriques périphériques par le biais des moyens de liaison individuelle (101) ; et
- la liaison électrique des câbles (100) avec l'appareil électrique central par le biais du moyen de liaison centrale (102).
